Europäisches Patentamt

European Patent Office

Office européen des brevets

(11) Publication number:  **0 170 817**
**B1**

## (12) EUROPEAN PATENT SPECIFICATION

(45) Date of publication of patent specification: **16.05.90**

(51) Int. Cl.⁵: **C 01 B 21/064**

(21) Application number: **85106966.6**

(22) Date of filing: **05.06.85**

(54) **A high-purity powder of hexagonal boron nitride and a method for the preparation thereof.**

(30) Priority: **07.06.84 JP 117375/84**
**30.08.84 JP 182379/84**

(43) Date of publication of application:
**12.02.86 Bulletin 86/07**

(45) Publication of the grant of the patent:
**16.05.90 Bulletin 90/20**

(84) Designated Contracting States:
**DE FR GB NL SE**

(56) References cited:
**DE-B-1 667 583**
**FR-A-1 475 367**
**GB-A- 870 084**
**US-A-4 107 276**

**PATENT ABSTRACTS OF JAPAN, vol. 7, no. 147**
**(C-173)1292r, 28th June 1983; & JP - A - 58 60603**

The file contains technical information
submitted after the application was filed and
not included in this specification

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(73) Proprietor: **Kawasaki Refractories Co., Ltd.**
**1576-2, Higashioki Nakahiro**
**Akoh Hyogo-ken (JP)**

(72) Inventor: **Ogasawara, Takeshi Research**
**Laboratories**
**Kawasaki Steel Corporation 1, Kawasaki-cho**
**Chiba Chiba-ken, 260 (JP)**
Inventor: **Koshida, Takahisa Research**
**Laboratories**
**Kawasaki Steel Corporation 1, Kawasaki-cho**
**Chiba Chiba-ken, 260 (JP)**
Inventor: **Koitabashi, Toshimitsu Research**
**Laboratories**
**Kawasaki Steel Corporation 1, Kawasaki-cho**
**Chiba Chiba-ken, 260 (JP)**
Inventor: **Sasaki, Kimiaki Kawasaki Refractories**
**Co. Ltd.**
**1576-2, Nakahiro Aza Higashioki Akoh**
**Hyogo-ken (JP)**

(74) Representative: **Altenburg, Udo, Dipl.-Phys.**
**et al**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

**Description**

Background of the Invention

The present invention relates to a high-purity powder of hexangonal boron nitride and a method for the preparation thereof. More particularly, the invention relates to a method for the preparation of powdery hexagonal boron nitride of high purity by the reaction of a boron compound, e.g. boric acid and boron oxide, and a nitrogen compound in an atmosphere of ammonia gas or inert gas followed by an upgrading treatment as well as the high-purity powdery hexagonal boron nitride thus prepared.

As is well known, hexagonal boron nitride, referred to as h-BN hereinbelow, is a material having excellent properties such as heat resistance, lubrication, electric insulation or thermal conductivity so that its applications include not only as a solid lubricant or mold release agent in the form of a powder but also as metallurgical crucibles, electric insulating materials or various kinds of electronic materials in the form of a shaped and sintered body used in a wide variety of industrial fields.

Various methods are known for the industrial preparation of boron nitride of which the most widely practiced is the method in which a boron compound such as boric acid and boron oxide and a nitrogen compound such as urea are blended together in a powdery form and the powdery blend is heated in an atmosphere of ammonia gas at a temperature of 800°C or higher (see, for example, Japanese Patent Publications 38-1610 (1610/1963) and 45-36213 (36213/1970) and Japanese Patent Kokai 47-27200 (Laid-open 27200/1972)).

The powdery h-BN prepared in this method, however, has a limited purity of, usually, 80 to 90% and the average crystallite size ($L_c$) determined by the method of powder X-ray diffraction, which is considered to be a measure of the lubricity, is only 10 nm or smaller with low crystallinity and absence of regularity in the crystalline structure. Although no exact interrelation has been established between the lubricity and the crystallite size $L_c$ of a powdery h-BN, it is generally understood that a value of $L_c$ larger than 70 nm is desirable for the h-BN to be imparted with a friction coefficient of 0.2 or smaller to exhibit sufficient lubricity.

It is therefore usual that such a crude h-BN powder having low purity and low crystallinity is subsequently subjected to an upgrading treatment. A conventional method therefore is that the crude h-BN powder is heated in an atmosphere of an inert gas such as nitrogen and argon at a temperature in the range from 1700 to 2100°C so that the impurity ingredient such as oxygen, carbon, hydrogen and the like are dissipated with simultaneous growth of the crystallites to increase the value of $L_c$ and hence to improve the lubricity.

A problem in the powdery h-BN prepared in the above described upgrading method with high purity and high crystallinity is that the powder is less suitable for sintering in the preparation of shaped and sintered articles because of the thermal and chemical stability. Therefore, sintered articles of such a powder are usually prepared by the method of hot pressing at a very high temperature of 1800 to 2100°C under a moulding pressure of 50 to 300 kg/cm². These sintering conditions are still insufficient for obtaining a sintered boron nitride body of high density. Therefore, it is a usual way that the h-BN powder is admixed with a sintering aid such as boron oxide to accelerate sintering of the h-BN powder. Although the sintering behavior of the h-BN powder can be improved as desired by increasing the amount of the sintering aid, the use of a sintering aid is unavoidably accompanied by a problem that the sintering aid remaining in the sintered body acts as an impurity to cause degradation of the high temperature characteristics of the sintered body inherent to the h-BN.

The sintered body prepared of such a high-purity, high crystallinity h-BN powder has another problem of anisotropy in the physical properties.

Thus, the platelet-like particles of the h-BN are oriented in the course of sintering by hot pressing to develop a laminar structure of the texture in which the platelet-like particles are oriented perpendicularly to the direction of pressing resulting in considerably large differences in the physical and chemical properties such as thermal conductivity, corrosion resistance, thermal expansion or mechanical strength between the directions parallel to and within the plane perpendicular to the direction of pressing. Therefore, a disadvantage is unavoidable that such a sintered block is under limitation in the preparation of an article by cutting the block and in the use of the thus prepared article.

When a sintered body is prepared from a low-purity h-BN powder of low crystallinity having an $L_c$ of 8 to 50 nm, on the other hand, the boron oxide contained in the h-BN powder as an impurity acts as a sintering aid so that a high-density sintered body can be obtained relatively easily although the overall content of impurities has a limitation as a matter of course. Furthermore, the sintered body prepared from such a low-purity h-BN powder of low crystallinity is free from the problem of anisotropy by virtue of the crystal growth taking place in the course of sintering leading to an isotropic texture of the body. Nevertheless, the use of suchy a low-purity h-BN powder is undesirable due to the degradation in the high-temperature preformance of the sintered body as a consequence of the presence of large amounts of impurities.

As is described above, the conventional products of h-BN powders are either of high purity and high crystallinity or of low purity and low crystallinity so that isotropic sintered bodies of high purity and high density with excellent high-temperature performance can hardly be obtained from either type of the conventional products. Namely, a low-purity h-BN powder of low crystallinity can give a sintered body of high denisty and low anisotropy but with poor high-temperature performance which can be improved by use of a high-purity h-BN powder of high crystallinity only at the expense of the density and anisotropy of the sintered body.

Summary of the Invention

Thus, an object of the present invention is to provide a h-BN powder of high purity and relatively low crystallinity in compatibility with each other capable of giving a sintered boron nitride body of high density and low anisotropy with still excellent high-temperature characteristics.

Another object of the present invention is to provide a method for the preparation of a h-BN powder as described above without the problems and disadvantages in the prior art methods.

The h-BN powder provided by the invention is characterized by a high purity of at least 97% by weight and an average crystallite size in the range from 8 to 50 nm.

The first method of the invention for the preparation of the above mentioned h-BN powder comprises;

admixing a crude powder of hexagonal boron nitride with a powder of a carbonaceous material to form a powdery blend; and

heating the powdery blend in a stream of an inert gas.

The second method of the invention for the preparation of the above mentioned h-BN powder comprises:

admixing a powdery blend of boric acid or boron oxide and a nitrogen compound with borax or anhydrous borax in an amount in the range from 5 to 50% by weight based on the boric acid or boron oxide;

heating the powdery blend in an atmosphere of ammonia gas or inert gas to form a crude powder of hexagonal boron nitride;

admixing the formed crude powder of hexagonal boron nitride with a powder of a carbonaceous material in an amount from 0.5 to 2.0% by weight; and

heating the crude powder of hexagonal boron nitride admixed with a powder of a carbonaceous material at a temperature of 1300°C or higher in an atmosphere of an inert gas.

Alternatively, the powdery blend is prepared by admixing from 0.002 to 0.1 mole of an alkaline earth metal of an alkaline earth metal compound per mole of the boron and further with from 0.01 to 0.1 mole of a powder of a carbonaceous material and/or from 2.5 to 30% by weight of anhydrous borax based on the oxygen containing boron compound in the base blend.

Brief Description of the Drawing

FIGURE 1 is a graph showing the crystallite size in the conventional h-BN powders as a function of the purity.

FIGURE 2 is a graph showing the apparent density of sintered body of boron nitride prepared from conventional h-BN powders as a function of the average crystallite size $L_c$ in the powder.

FIGURE 3 is a graph showing the average crystallite size of the h-BN powders prepared according to the inventive method as a function of the amount of addition of the powdery carbonaceous material.

FIGURE 4 is a graph showing the purity of the h-BN powders after upgrading according to the inventive method as a function of the temperature of the heat treatment.

FIGURE 5 is a graph showing the purity of the h-BN powders after upgrading according to the inventive method as a function of the length of time in the heat treatment.

FIGURE 6 is a graph showing the purity of the h-BN powders after upgrading according to the inventive method as a function of the amount of addition of the powdery carbonaceous material.

FIGURE 7 is a graph showing the average particle diameter of the conventional h-BN powders as a function of the purity.

Detailed Description of the Preferred Embodiments

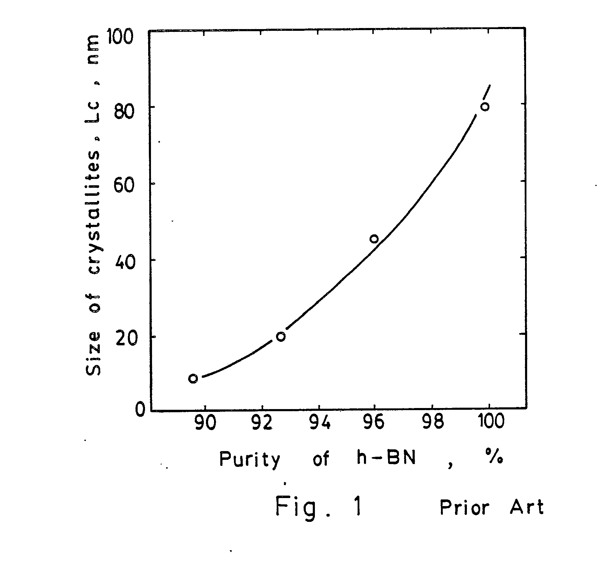

As is mentioned above, a correlation is found between the average crystallite size and the purity of the h-BN powders obtained by the heat treatment for upgrading of crude h-BN powders. FIGURE 1 illustrates such a relationship clearly indicating that the upgrading treatment of a crude powder by a mere heat treatment is necessarily accompanied by the growth of the crystallites. This means that the upgrading in the purity and the growth of the crystallites are phenomena concurrently taking place in the heat treatment. For example, the average crystallite size $L_c$ in a h-BN powder is always larger than 50 nm when the purity of the powder is 97% or higher.

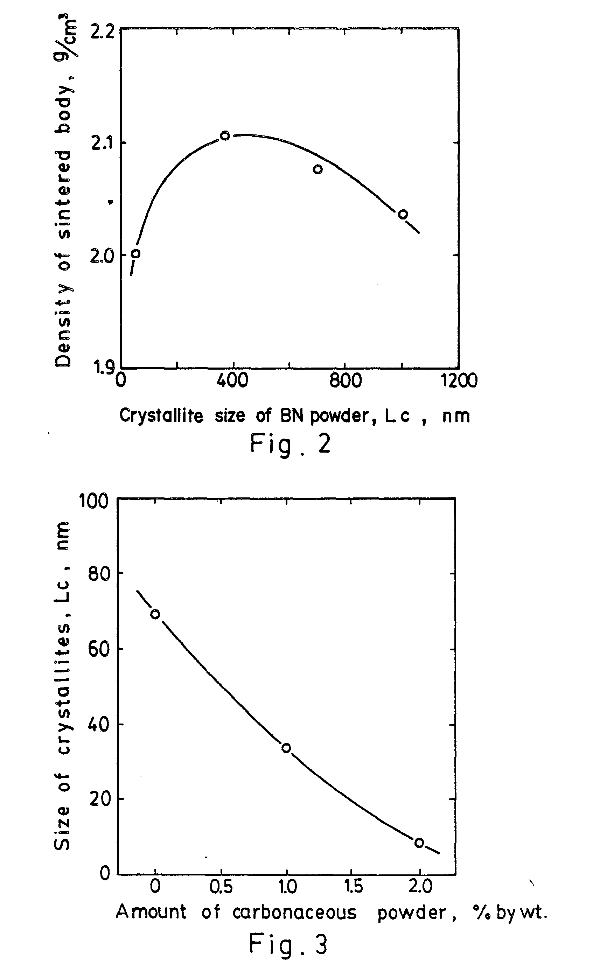

When such a h-BN powder of high crystallinity is used for the preparation of a sintered body, it is known that the apparent density of the sintered body is correlated with the average crystallite size of the h-BN powder. FIGURE 2 illustrates such a relationship in the sintered bodies obtained by hot-pressing for 1 hour under a pressure of 300 kg/cm² at 1900°C. As is shown in this figure, the density of the sintered body increases with the increase in the average crystallite size $L_c$ or, consequently, in the purity of the starting h-BN powder in the region where Lc is not larger than 30 nm while decrease in the density of the sintered body is noted when $L_c$ is increased beyond 50 nm notwithstanding the further increase in the purity with a maximum at about 40 nm of $L_c$.

Though not indicated with experimental data, appearance of anisotopy is also noted in the sintered

EP 0 170 817 B1

body prepared of a h-BN powder of which the average crystallite size $L_c$ exceeds 50 nm.

The above described experimental facts lead to a conclusion that the h-BN powder to be used in the preparation of a sintered body should have a purity of at least 97% while the average crystallite size $L_c$ thereof should not exceed 50 nm. Powders of h-BN having such unique parameters are not known in the prior art or not described in any publications and constitute a subject matter of the present invention. No particular lower limit is given of the average crystallite size $L_c$ but it should not be smaller then 8 nm from a practical standpoint.

Although not possible in the prior art, the present invention provides a ready means for the preparation of a h-BN powder having the unique combination of the parameters as mentioned above. Namely, a crude h-BN powder is subjected to a heat treatment for upgrading with admixture of a small amount of a powder of a carbonaceous material so that the upgrading in purity can be effected under suppression of the growth in the average crystallite size $L_c$.

FIGURE 3 of the accompanying drawing illustrates typical results of such an improved process for the upgrading treatment, in which a crude h-BN powder was admixed with an amount of a powdery carbonaceous material and heated for 30 minutes at 1800°C in a stream of nitrogen gas. The figure shows the value of $L_c$ as a function of the amount of addition of the carbonaceous powder in % by weight based on the crude h-BN powder. As is understood from the figure, the value of $L_c$ after the heat treatment is approximately halved by the addition of 1.0% by weight of a carbonaceous powder to the crude h-BN powder in comparison with the value in the case without the addition of the carbonaceous powder. It was noted that addition of 2.0% by weight of the carbonaceous powder was so effective that growth of the crystallites was almost completely suppressed to give a value of $L_c$ approximately identical with that in the crude h-BN powder before the upgrading treatment. The purity of the h-BN powder after the upgrading treatment was at least 99.5% in each case and the content of the residual carbon was only about 0.02%. Such a small amount of residual carbon has almost no adverse influences on the properties of the sintered body prepared of the thus ungraded high-purity h-BN powder. Thus, a crude h-BN powder can be fully upgraded in the purity by the heat treatment with admixture of a small amount of a carbonaceous powder to cause no growth of the average crystallite size without any adverse influences.

The above described method of upgrading is applicable to any crude h-BN powders. For example suitable crude h-BN powder includes that prepared by heating a powdery blend of a boron-containing compound such as boric acid, borax and the like and an organic or inorganic nitrogen-containing compound at a temperature of 800°C or below in a stream of ammonia gas. The purity or content of h-BN in the crude h-BN powder used in the above described upgrading should preferably be in the range from 70 to 90% by weight. When the purity is lower than 70% by weight, an unduly long time or an excessively high temperature is required for the heat treatment with consequently increased costs for the treatment or decreased effeciency of the treatment, when the purity of the crude h-BN powder is in excess of 90% by weight, on the other hand, the crystallites are already coarsened to some extent so that the desired effect for the prevention of crystallite growth may be partly cancelled.

The type of the powdery carbonaceous material is not particularly limitative including an amorphous carbon powder and highly graphitized powder as well as intermediate ones thereof although amorphous carbon powders are preferred in view of the higher effect for the suppression of the crystallite growth in the crude h-BN powder. The amount of the carbonaceous powder admixed with the crude h-BN powder should usually be in the range from 0.5 to 2.0% by weight based on the crude h-BN powder. When the amount thereof is smaller than 0.5% by weight, no sufficient effect can be exhibited for the prevention of crystallite growth in the h-BN powder so that the average crystallite size in the upgraded h-BN powder may sometimes outgrow the limit of 50 nm. When the amount of the carbonaceous powder is larger then 2.0% by weight, on the other hand, a disadvantage may be caused that a part of the carbonaceous powder remains in the h-BN powder after the heat treatment depending on the conditions of the heat treatment to decrease the purity of the upgraded h-BN powder. At any rate, the amount of the carbonaceous powder admixed with the crude h-BN powder should be in the above recited range when full exhibition of the upgrading effect is desired.

The conditions for the heat treatment of the crude h-BN powder admixed with the carbonaceous powder as described aboved may be similar to those in the conventional method of heat treatment for the upgrading of a crude h-BN powder without admixture of a carbonaceous powder. For example, the heat treatment is performed at a temperature in the range of 1700 to 2100°C for a length of time in the range from 30 minutes to 2 hours in a stream of an inert gas. In this manner, the crude h-BN powder can be converted into an upgraded h-BN powder having a purity of at least 97% and a low crystallinity with an average crystallite size $L_c$ in the range from 8 to 50 nm.

By virtue of the still retained activity of the powder as a consequence of the undeveloped crystallites, the h-BN powder upgraded in the above described manner has excellent sinterability in the preparation of the sintered body so that a shaped and sintered body of high density can readily be prepared by the techniques of hot-pressing. Moreover, growth of the crystallites may proceed in the course of sintering so that the resultant sintered body is highly isotropic without the disadvantage due to anisotropy. Further, the high-temperature performance of the sintered body is naturally excellent as a consequence of the high purity of the ungraded h-BN powder.

As is understood from FIGURE 3, the average crystallite size $L_c$ in the upgraded h-BN powder can freely

4

be controlled by suitably selecting the amount of the carbonaceous powder admixed with the crude h-BN powder to afford a possibility of optimization of the average crystallite size in compliance with the requirements in a particular application.

Although the above described method for the upgrading of a crude h-BN powder is practically of high value, it is sometimes more desirable to further improve the efficiency of the method, i.e. to obtain the desired effect of ungrading at a lower temperature within a shorter time. Accordingly, the inventors have continued further investigations and arrived at a discovery that a fully effect of upgrding of a crude h-BN powder can be obtained at a relatively low temperature within a relatively short time when the crude h-BN powder, which is admixed with a carbonaceous powder in the heat treatment for upgrading, has been prepared from a powdery blend of boric acid or boron oxide and a nitrogen compound with admixture of an alkali metal compound or, in particular, borax $Na_2B_4O_7 \cdot 10 H_2O$ or anhydrous borax $Na_2B_4O_7$.

Namely, the method of the invention for the preparation of an upgraded h-BN powder involving the above mentioned further improvement comprises the steps of:

(a) admixing a powdery blend of boric acid or boron oxide and a nitrogen compound with borax or anhydrous borax in an amount in the range from 5 to 50% by weight based on the boric acid or boron oxide;

(b) heating the powdery blend in an atmosphere of ammonia gas or inert gas to form a crude powder of hexagonal boron nitride;

(c) admixing the crude powder of hexagonal boron nitride with a powder of a carbonaceous material in an amount from 0.5 to 2.0% by weight; and

(d) heating the powder of the hexagonal boron nitride admixed with a powder of a carbonaceous material at a temperature of 1300°C or higher in an atmosphere of an inert gas.

As is understood from the above description, the scope of the improvement in the inventive method is in the admixture of an alkali metal compound such as borax and anhydrous borax in a limited amount with the starting powdery blend of boric acid or boron oxide and a nitrogen-containing organic or inorganic compound followed by heating of the powdery blend at a temperature in the range from 800 to 1000°C in an atmosphere of ammonia gas or inert gas such as nitrogen to give a crude h-BN powder which is then subjected to the upgrading treatment by heating after admixture with a limited amount of a carbonaceous powder.

Although the role played by the sodium content in the borax or anhydrous borax is in the enhancement of the upgrading effect of the crude h-BN powder in the subsequent heat treatment with admixture of a carbonaceous powder, it is essential that the borax or anhydrous borax is added not to the crude h-BN powder but to the starting powdery blend of boric acid or boron oxide and a nitrogen compound for the preparation of the crude h-BN powder. By this means, the sodium content can be distributed in the crude h-BN powder more uniformly and more finely to exhibit unexpectedly increased effect of enhancement on the upgrading treatment so that the upgrading by heat treatment is complete even at a lower temperature of 1300 to 1500°C within a greatly shortened length of time to give a purity of 99% or higher.

Owing to the melting point or borax or anhydrous borax at 745°C which is definitely higher than that of boron oxide at 450°C or below, the borax or anhydrous borax admixed in the powdery blend for the synthesis of boron nitride remains solid even after the boron oxide has been melted in the course of temperature elevation to serve as a filler. When the borax or anhydrous borax is molten at further increased temperatures, the viscosity of the melt is decreased as a result of the interaction between the sodium oxide in the borax and the molten boron oxide. Accordingly, the effective surface area of the reaction mixture contacting with the atmospheric ammonia gas or inert gas is considerably increased to enhance the efficiency of the reaction in comparison with the reaction in the absence of borax or anhydrous borax as an additive. It is of course that the borax or anhydrous borax admixed with the blend serves also as a boron source in addition to the role played thereby as a reaction promotor described above.

The crude h-BN obtained in the above described manner is then subjected to the upgrading treatment in the manner previously described. Thus, the crude h-BN obtained in the form of a mass is disintegrated and admixed with a small amount, e.g. 0.5 to 2.0% by weight, of a carbonaceous powder and heated at a temperature of 1300°C or higher or 1300 to 1500°C in an inert atmosphere of nitrogen, argon and the like to give an upgraded h-BN powder having a purity of 99% or higher within a short time in comparison with the conventional upgrading treatment.

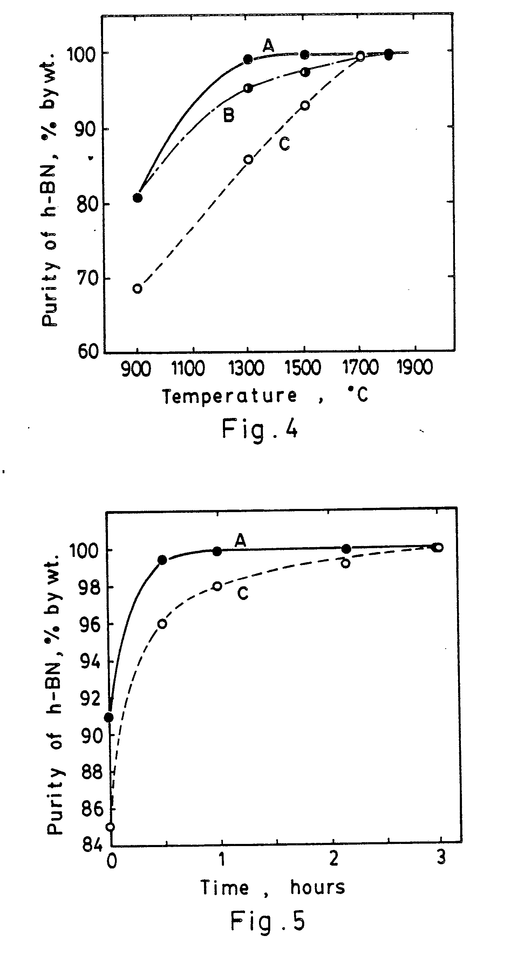

FIGURE 4 of the accompanying drawing illustrates the results of the purity of the upgraded h-BN powders obtained from boric acid and melamine as the starting reactant components for the crude h-BN as a function of the temperature in the upgrading treatment carried out for 30 minutes in an atmosphere of nitrogen by the curves A, B and C, of which curve A illustrates the results obtained by the admixture of 10% by weight of anhydrous borax based on the boric acid to the blend of boric acid and melamine followed by the upgrading treatment of the crude h-BN powder with admixture of 1.5% by weight of a carbonaceous powder, curve B illustrates the results obtained by the admixture of 10% by weight of anhydrous borax based on the boric acid to the blend of boric acid and malamine followed by the upgrading treatment of the crude h-BN powder without addition of any carbonaceous powder, and curve C illustrates the results obtained without addition of anhydrous borax in the synthesis of crude h-BN powder and carbonaceous powder in the upgrading treatment. In each of these experiments, the mixing ratio of the boric acid and melamine in the synthesis of crude h-BN was 100:102 by weight and the powdery blend of them with or without admixture of anhydrous borax was heated at 900°C for 2 hours in a stream of ammonia gas. These results shown in FIGURE 4 clearly supports the conclusion that the admixture of borax or anhydrous borax in the preparation of the crude h-BN is very effective for obtaining a purity of 99% or higher of the upgraded h-BN even when the upgrading treatment is performed at 1500°C or below for a relatively short time of 30 minutes.

Curves A and C in FIGURE 5 illustrate the effect of the varied length of time for the upgrading treatment on the purity of the upgraded h-BN powders obtained in the same procedures as in the preparations illustrated by the curves A and C in FIGURE 4, respectively, except that the temperature in the upgrading treatment was always 1500°C. The results shown in FIGURE 5 support the conclusion that a high purity of 99% of the upgraded h-BN can be obtained according to the improved method of the invention even when the time for the upgrading treatment at 1500°C is as short as 30 minutes.

Following is a description of the details in the above proposed improved method of the invention.

In the first place, the amount of borax or anhydrous borax added to the powdery blend of boric acid or boron oxide and a nitrogen compound should be in the range from 5 to 50% by weight based on the amount of the boric acid or boron oxide. When the amount thereof is too small, the distribution of the sodium content in the powdery blend may not be sufficient so that the desired upgrading effect cannot be fully exhibited at a relatively low temperature of the upgrading treatment at 1300 to 1500°C with rather insignificant improvement in the reaction conversion over the results without addition of borax or anhydrous borax. When the amount thereof is in excess of 50% by weight, on the other hand, the improvement in the distribution of the sodium content in the blend is accompanied by a disadvantage that the sodium content may partly remain in the upgraded powder unless the length of time for the upgrading treatment at a relatively low temperature is undesirably extended to effect complete evaporation of the sodium content leading to a loss of the advantage in the above proposed improved method of the invention. It may be needless to say in this case that borax and anhydrous borax may be used either singly or as a combination of both.

The basic formulation of boric acid or boron oxide and a nitrogen compound in the powdery blend for the synthesis of crude h-BN may be conventional. For example, the nitrogen compound is admixed in an amount of 70 to 200 parts by weight with 100 parts by weight of boric acid or boron oxide. Exemplary of suitable nitrogen compound are urea, thiourea, biuret, melamine, dicyandiamide, cyanuric acid and the like.

The heat treatment of the powdery blend of boric acid or boron oxide and a nitrogen compound with further admixture of borax or anhydrous borax in the synthesis of a crude h-BN is performed, similarly to the conventional methods, at a temperature in the range from 800 to 1000°C for about 30 minutes to 5 hours in a stream of ammonia gas or an inert gas. When the temperature is lower than 800°C the reaction cannot be complete to give a decreased yield. Increase of the temperature to exceed 1000°C is economically not advantageous though with some decrease in the reaction time.

Details are already given of the upgrading treatment of the crude h-BN powder with admixture of a carbonaceous powder and need not be repeated here. In this case, however, the temperature of the upgrading treatment can be greatly decreased and the temperature should be in the range from 1300 to 1600°C or, preferably, from 1300 to 1500°C to give an upgraded h-BN powder having a purity of 99% or higher within a short time of 30 minutes to 2.5 hours. Needless to say, the reaction time can be greatly decreased in comparison with conventional methods when the reaction temperature is the same.

Following is a description of the further development of the method for the preparation of a h-BN powder suitable for use in the preparation of a shaped and sintered article of h-BN. Such a highly active, low-crystalline h-BN powder can be obtained in a process including only one heat treatment.

Thus, a high-purity, low crystalline h-BN powder is prepared in a process comprising the steps of:

admixing a powdery blend of an oxygen-containing boron compound and a nitrogen compound with an alkaline earth metal compound in an amount of 0.002 to 0.1 mole as alkaline earth metal per mole of the boron in the boron compound;

admixing the powdery blend further with a carbonaceous powder in an amount of 0.01 to 0.1 mole as carbon per mole of the boron in the boron compound and/or anhydrous borax in an amount of 2.5 to 30% by weight based on the oxygen-containing boron compound; and

heating the powdery blend in a non-oxidizing atmosphere under normal or reduced pressure.

In the above described method, the oxygen-containing boron compound is, through not limitative, exemplified by boric acid, boron oxide, ammonium borate and the like and the nitrogen compound is exemplified by urea, melamine, dicyandiamide, cyanuric acid, ammonium chloride and the like in view of their decomposability and vaporizability at high temperatures. The blending ratio of these compounds should be such that the molar ratio of nitrogen to boron N/B is at least 1 in the powdery blend.

As an example, boric acid and melamine were blended in such a proportion as to give a N/B molar ratio of 2 and the powdery blend was heated in an atmosphere of ammonia gas at 1300°C or at 1500°C to give h-BN powders having a purity of 85% by weight and 92% by weight, respectively, of which the average crystalite size $L_c$ was 45 nm. Accordingly, investigations were undertaken to develop a method for the preparation of a high-purity h-BN powder of which the value of $L_c$ is 20 mm or smaller by a heat treatment at a temperature as low as possible. A conclusion obtained in the investigations is that the low purity of h-BN in the above preparations is due to the unreacted boron oxide $B_2O_3$ and the growth of the crystallites is due to the formation of a liquid phase of the boron oxide having a low melting point of 450°C which promotes the crystallite growth of h-BN therethrough at about 1600°C and higher. This means that the crystallite growth in unavoidable when the reaction temperature is increased to 1600°C or higher with an object to obtain a high purity of the h-BN by the vaporization of the boron oxide. Therefore, a high purity of the h-BN can be obtained by completing the vaporization of the boron oxide before the reaction mixture reaches a temperature at which significant crystallite growth commences.

The investigations directed to a treating method satisfying the above mentioned conditions have arrived at a discovery that boron oxide can be removed effectively by the addition of a borax or a carbonaceous powder.

First to give an explanation on the effect obtained by the addition of a borax, the borax may be hydrated borax or anhydrous borax, which reacts with the boron oxide $B_2O_3$ to form sodium metaborate having a relatively low boiling point so that the boron oxide is removed in the form of the vapor of sodium metaborate at 1500°C or higher to increase the purity of the h-BN. Different from sodium oxide, sodium metaborate is free from deliquescence so that the vaporized sodium metaborate is trapped at the condenser and not responsible for the damage of the reaction vessels. The recovered sodium metaborate can be reused as the boron source. By virtue of the melting point at 740°C higher than those of boric acid and boron oxide, anhydrous borax serves as a dispersion medium for the boron source in the reaction to increase the contacting area with the nitriding gas greatly accelerating the reaction. The amount of addition of borax or anhydrous borax should be in the range from 2.5 to 30% by weight as anhydrous borax based on the starting boron compound. An amount thereof in excess of 30% by weight is undesirable due to the formation of sodium oxide in addition to sodium metaborate while the desired effect can be obtained only insufficiently when the amount is too small as a matter of course. Although the purity of h-BN can be increased similarly by the addition of other alkali metal compounds such as sodium carbonate which reacts with boron oxide to form sodium metaborate, the amount of addition thereof is limited to prevent formation of sodium oxide while a small amount of sodium carbonate cannot be expected to serve as dispersion medium in the reaction mixture so that the purity of the h-BN cannot be increased by the treatment at 1300°C or below.

Secondly, an explanation is given of the carbonaceous powder as an alternative additive to accelerate vaporization of boron oxide. Namely, the carbonbaceous powder acts as a reducing agent for the boron oxide $B_2O_3$ which is reduced to $B_2O_2$ and removed. The type of the carbonaceous powder is not particularly limitative ranging from an amorphous carbon powder to a highly graphitized powder but amorphous carbon powders are preferable. The amount of the carbonaceous powder to be added should desirably be equimolar to the boron oxide $B_2O_3$ in the mixture since an excessive amount thereof may lead to a residual content of unreacted carbon after the heat treatment. Therefore, the amount depends on the content of residual boron oxide $B_2O_3$. Taking the h-BN purity of 70% by weight as a lower limit, corresponding to the value conventionally obtained in the prior art methods, the amount of the carbonaceous powder should be 0.1 mole or smaller per mole of the boron in the starting boron compound while no reducing effect can be expected when the amount is one tenth or smaller of the above mentioned upper limit. Thus, the preferable amount of the carbonaceous powder should be in the range from 0.01 to 0.1 mole per mole of the boron in the starting boron compound.

Combined use of anhydrous borax and carbonaceous powder is still more effective in respect of purity increase in the h-BN. In particular, carbonbaceous powders can exhibit an effect of preventing crystallite growth. The mechanism thereof is presumably that, while a liquid phase is formed by the addition of borax before vaporization of sodium metaborate leading to the crystallite growth through the liquid phase, the boron oxide $B_2O_3$ is vaporized without forming a liquid phase by the addition of a carbonaceous powder so that crystallite growth through a liquid phase never takes place.

Thirdly, an explanation is given on the effect of the addition of an alkaline earth metal compound.

Although the addition of anhydrous borax or a carbonaceous powder is effective for removing boron oxide $B_2O_3$ as an impurity in h-BN, the effect cannot be complete so that a trace amount of $B_2O_3$ always remains unremoved unavoidably. Such a residual content of $B_2O_3$ is detrimental on the stability of sintered body of h-BN due to the volume expansion caused by the reaction thereof with atmospheric moisture. Further, increase in the residual content of $B_2O_3$ in the h-BN powder results in decrease of the mechanical strength of a sintered body shaped thereof at high temperatures of, for example, 1000°C or higher due to the low melting point of $B_2O_3$ at 450°C.

Accordingly, the investigations have been directed to the development of a method for converting the residual $B_2O_3$ into a stable and high-melting compound in the sintered body and arrived at a discovery of the effectiveness of the addition of an alkaline earth metal compound or, in particular, an alkaline earth metal carbonate.

For example, calcium carbonate added to the powdery blend is converted into calcium oxide by the heat treatment, which reacts with $B_2O_3$ to form several high-melting compounds such as $CaO\ B_2O_3$ melting at 1125°C, $2CaO\ B_2O_3$ melting at 1280°C $3CaO\ B_2O_3$ melting at 1454°C and the like having stability at high temperatures.

The amount of the alkaline earth metal compound to be added to the powdery blend should balance with the amount of the residual $B_2O_3$ after formation of the h-BN by the heat treatment. In view of the purity of high-purity h-BN products which usually contain at least 95% of h-BN, the amount should be 0.1 mole or smaller as alkaline earth metal per mole of the boron in the starting oxygen-containing boron compound. On the other hand, the highest purity obtained in the inventive method is about 99% so that the alkaline earth metal compound should be added in an amount of at least 0.002 mole per mole of the boron in the starting oxygen-containing boron compound.

In respect of the conditions of the heat treatment, the atmosphere should be non-oxidizing with ammonia gas, inert gases and the like and the temperature should be in the range from 1300 to 1600°C since growth of the crystallites may proceed significantly at 1600°C or higher. Preferably, the temperature should be in the range from 1500 to 1600°C in order to eliminate any trace amount of sodium oxide resulting from borax and remaining in the h-BN as an impurity. It is further preferable that the heat treatment is performed under reduced pressure with an object to accelerate vaporization of the impurities including sodium metaborate and $B_2O_3$ formed by the addition of borax or $B_2O_2$ and $B_2O_3$ formed by the addition of a carbonaceous powder so that the efficiency of the reaction at 1300°C or higher to obtain a high-purity h-BN can further be improved along with saving of heat energy as a result of the shortened reaction time.

In order that a high-purity h-BN powder can be used satisfactorily in the preparation of shaped and sintered articles, the parameters which should be satisfied by the powder include the particle size distribution of the powder in addition to the already discussed purity of h-BN and the average crystallite size $L_c$. When a crude h-BN powder is subjected to the upgrading treatment by heating at 1700 to 2100°C in a non-oxidizing atmosphere of nitrogen, argon and the like gas, the upgrading of the powder in respect of the purity is always accompanied by the growth of the crystallites as well as the growth of the particle size so that the particle diameter may be increased to about 3 to 5 μm at the largest with broadest particle size distribution.

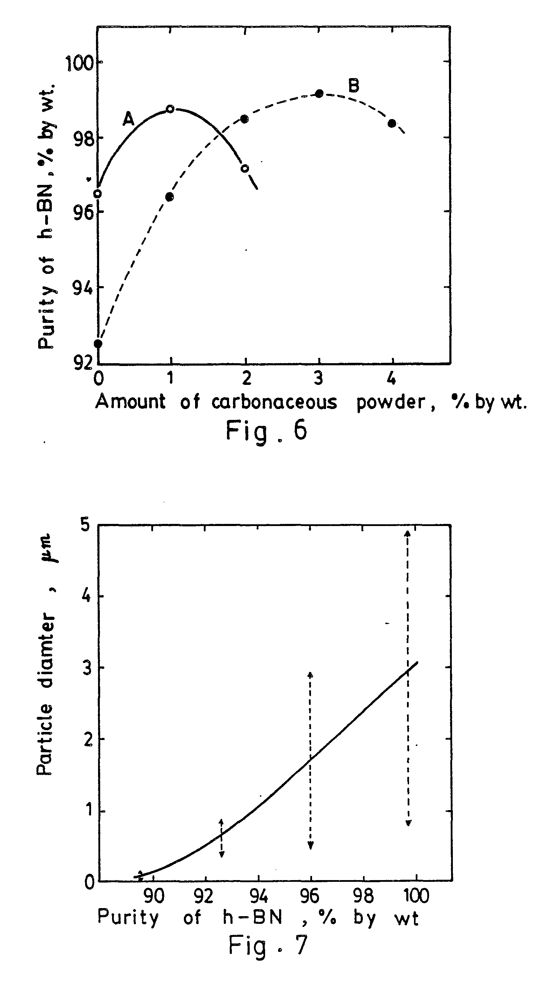

FIGURE 7 of the accompanying drawing illustrates the particle diameter of upgraded h-BN powders obtained by the heat treatment for 60 minutes as a function of the purity of the upgraded h-BN powders. The double-sided arrows of broken line in this figure each indicate the range of the particle size distibution. Therefore, it has been an important problem to develop a method of upgrading of a crude h-BN powder without growth in both of the crystallite size and the particle size. In this regard, the growth in the particle size can hardly be decreased in the previously described method of upgrading in which th crude h-BN powder is admixed with a carbonaceous powder and heated in a stream of an inert gas so that this method is not quite satisfactory when the upgraded h-BN powder is to be used for the preparation of shaped and sintered articles since an upgraded h-BN powder would have good sinterability when the particle diameter thereof is 0.5 μm or smaller.

In this connection, the inventors have undertaken further investigations and arrived at an unexpected discovery that the growth in the particle size of h-BN can be efficiently suppressed when the heat treatment of a crude h-BN powder admixed with a small amount of a carbonaceous powder is performed in a stream of ammonia gas or gaseous mixture of ammonia and non-oxidizing gas such as nitrogen, argon and the like.

FIGURE 6 of the accompanying drawing illustrates the purity of the upgraded h-BN powders obtained by admixing crude h-BN powders having purity of 89% (curve A) and 69% (curve B) with varied amounts of a carbonaceous powder and heating the powdery blend at 1600°C for 60 minutes in a stream of ammonia gas as a function of the amount of the admixed carbonaceous powder. The particle diameter in each of the thus upgraded h-BN powders was always 0.5 μm or smaller indicating the effectiveness of ammonia gas in the atmosphere of the heat treatment. The mechanism for the remarkable effect of particle growth prevention is presumably that the ammonia gas contacting with the powdery blend serves to nitride the boron oxide and other impurities in the h-BN powder responsible for the particle growth to produce high-purity fine particles.

The carbonaceous powder is not particularly limitative but amorphous carbon powders are preferable. The amount of the carbonaceous powder should be in the range from 5 to 15% by weight of the overall amount of impurities in the crude h-BN powder. The heat treatment of the powdery blend of the crude h-BN powder and the carbonaceous powder is performed in an atmosphere of ammonia gas or a gaseous mixture of ammonia and a non-oxidizing gas such as nitrogen, argon and the like, of which the content of ammonia gas is preferably at least 30% by volume. Different from conventional methods for upgrading in which the heat treatment is performed at 1700°C or higher, the heat treatment in this case can be performed at a lower temperature and a satisfactorily upgraded h-BN powder having a purity of 98% or higher and a particle diameter not exceeding 0.5 μm can be obtained by the heat treatment even at a temperature as low as 1500°C although still lower temperatures are undesirable due to the unduly long time taken for the upgrading treatment although the upgraded h-BN powder may be satisfactory in respect of purity and particle size.

Following are the examples to illustrate the invention in more detail.

Example 1

A crude h-BN powder prepared from borax and urea as the starting materials and having a purity of h-BN of 90% was admixed with 0.75, 1.0 or 1.5% by weight of an amorphous graphite powder and each of the mixtures was thoroughly dry-blended in a porcelain-made ball mill. The powdery blend was packed into a crucible of sintered boron nitride and heated at 1800°C for 30 minutes in a stream of nitrogen in a high-frequency induction furnace with graphite heating elements. The thus obtained upgraded h-BN powders were subjected to the determination of purity and the average crystallite size $L_c$ by the powder X-ray diffractometric method to give the results shown in Table 1 together with the results of the h-BN powders prepared by the conventional method.

Each of the h-BN powders was shaped into a sintered body by hot-pressing at 1900°C for 1 hour under a molding pressure of 200 kg/cm². The density of the sintered bodies is shown in Table 1.

Table 1

| Graphite added, % by weight | h-BN powder Lc, nm | Purity, % | Density of sintered body, g/cm$^3$ |
|---|---|---|---|
| 0.75 | 42.5 | 99.8 | 2.12 |
| 1.0 | 32.0 | 99.7 | 2.11 |
| 1.5 | 18.3 | 99.7 | 2.10 |
| None | 78.5 | 99.7 | 2.07 |
| None | 15.0 | 91.8 | 2.06 |

As is clear from the results shown in Table 1, all of the h-BN powders has a purity of at least 97% by weight and the average crystallite size $L_c$ thereof in the range from 8 to 50 nm. The sintered bodies prepared of the thus upgraded h-BN powder each have a density definitely larger than the density of the sintered body prepared of the conventional h-BN powder. In addition, almost no orientation of the crystallites was found in the thus prepared sintered bodies while the crystallites had grown to have a value of $L_c$ of about 120 nm.

Example 2

A crude h-BN powder having a purity of 72% and a value of $L_c$ of 4.8 nm was prepared by heating a powdery blend of 1 kg of boric acid and 1 kg of melamine at 900° for 2 hours in a stream of ammonia. A powdery blend was prepared by dry-blending 300 g of the thus obtained crude h-BN powder and 3.0 g of an amorphous graphite powder and the powdery blend was heated in a graphite crucible at 1800°C for 1 hour in a stream of nitrogen in a high-frequency induction furnace to give 210 g of an upgraded h-BN powder having a purity of 99.6% and a value of $L_c$ of 28.8 nm. The thus upgraded h-BN powder was shaped by hot pressing at 1900°C for 1 hour under a molding pressure of 200 kg/cm$^2$ into a sintered body which had a density of 2.12 g/cm$^3$.

Example 3

A powdery blend was prepared by dry-blending 100 parts by weight of boric acid. 102 parts by weight of melamine and 10 parts by weight of anhydrous borax and this powdery blend was heated in an iron-made reaction vessel at 900°C for 2 hours in a stream of ammonia gas to give a crude h-BN powder which had a purity of 99.8%. A 150 g portion of this crude h-BN powder was admixed with 2.3 g of an amorphous graphite powder by dry blending and the blend was heated in a graphite crucible placed in a Tamman furnace at 1500°C for 2 hours in a stream of nitrogen to give 129 g of an upgraded h-BN powder which had a purity of 99.9%.

Example 4

A crude h-BN powder having a purity of 88.6% was prepared in a similar manner to Example 3 by heating a powdery blend of 100 parts by weight of boric acid, 102 parts by weight of melamine and 20 parts by weight of borax at 900°C for 3 hours in a stream of ammonia gas in an iron-made reaction vessel. A 150 g portion of this crude h-BN powder was admixed with 2.6 g of an amorphous graphite powder by dry blending and the powdery blend packed in a graphite crucible was heated at 1500°C for 2 hours in a stream of nitogen gas in a Tammann furnace to give 120 g of an upgraded h-BN powder which has a high purity of 99.8%.

Comparative Example 1

A crude h-BN powder was prepared by heating a powdery blend of 100 parts by weight of boric acid and 102 parts by weight of melamine obtained by dry blending and packed into an iron-made reaction vessel at 900°C for 2 hours in a stream of ammonia gas. This crude h-BN powder had a purity of 84.4%. A powdery blend of 150 g of this crude h-BN powder and 13 g of sodium carbonate was packed into a graphite crucible and heated at 1500°C for 3 hours in a stream of nitrogen gas in a Tammann furnace to give 118 g of an upgraded h-BN powder which has a purity of 99.6%.

Examples 5 to 12 and Comparative Example 2.

Following description of the preparation procedure is given for Example 7 but the preparation conditions were much the same as in the other Examples.

A powdery blend was prepared by thoroughly blending 1.8 kg of boric acid, 2 kg of melamine, 150 g of anhydrous borax having a particle size of 0.074 mm (200 mesh) or finer, 20 g of carbon black and 10 g of calcium carbonate having a particle size of 0.074 mm (200 mesh) or finer in a V-blender. A graphite crucible having an inner diameter of 200 mm and a height of 300 mm was charged with the powdery blend and, with a cover put thereon, placed and heated in a high-frequency induction furnace at 1550°C for 1 hour in an atmosphere of nitrogen gas to give a h-BN powder which had a purity of 97.2% and a value of $L_c$ of 10.2 nm and contained 0.7% of CaO as an impurity.

The thus obtained h-BN powder was shaped by hot pressing at 1900°C for 2 hours under a molding pressure of 200 kg/cm$^2$ into a sintered body which had density of 2.12 g/cm$^3$ and a bending strength at 1000°C of 8.9 kg/mm$^2$.

Table 2 below summarizes the formulation of the powdery blend including the boron source, i.e. boric acid or ammonium borate, nitrogen source, i.e. dicyandiamide, melamine or urea, alkaline earth metal compound, i.e. calcium carbonate $CaCO_3$ or barium carbonate $BaCO_3$, carbonaceous powder, i.e. carbon black or pitch, and anhydrous borax. The heating conditions in each of the Examples and Comparative Example 2(C—2) were the same as described above for Example 7 excepting Examples 10 to 12 in which the powdery blend was heated in an atmosphere of nitrogen up to a temperature of 900°C and thereafter in vacuum of $10^{-1}$ Torr at 1550°C for 1 hour.

Table 3 summarizes the results of the thus prepared h-BN powders including purity of h-BN, average crystallite size $L_c$ and content of alkaline earth metal oxide as an impurity and properties of the sintered bodies including density and bending strength at 1000°C. It was noted that the h-BN powder prepared in Comparative Example 2(C—2) contained, in addition to 6.4% of CaO as an impurity, 8.6% of carbon and 5.9% of sodium oxide.

For further comparison, a commercially available h-BN powder having a purity of 97% was blended in a ball mill with 1.5% of calcium carbonate powder and the powdery blend was shaped by hot pressing under the same conditions as described above into a sintered body, which was found to have a denisty of 1.94 g/cm$^3$ and a bending strength at 1000°C of 3.1 kg/mm$^2$.

Table 2

| Example | raw material | | additive | | |
| --- | --- | --- | --- | --- | --- |
| | boron source | nitrogen source | alkaline earth metal compound | carbonaceous powder | anhydrous borax |
| 5 | boric acid 1.8 kg | dicyandiamide 2 kg | $BaCO_3$ 2.5 g | carbon black 40 g | --- |
| 6 | boric acid 1.8 kg | melamine 2 kg | $CaCO_3$ 5 g | --- | 200 g |
| 7 | boric acid 1.8 kg | melamine 2 kg | $CaCO_3$ 10 g | carbon black 20 g | 150 g |
| 8 | boric acid 1.8 kg | melamine 2 kg | $BaCO_3$ 5 g | carbon black 20 g | 150 g |
| 9 | ammonium borate 1 kg | urea 2.5 kg | $CaCO_3$ 15 g | pitch 10 g | 250 g |
| 10 | boric acid 1.8 kg | dicyandiamide 2 kg | $BaCO_3$ 2.5 g | carbon black 40 g | --- |
| 11 | boric acid 1.8 kg | melamine 2 kg | $CaCO_3$ 5 g | --- | 200 g |
| 12 | boric acid 1.8 kg | melamine 2 kg | $CaCO_3$ 10 g | carbon black 20 g | 150 g |
| C-2 | boric acid 1 kg | dicyandiamide 1.5 kg | $CaCO_3$ 100 g | carbon black 200 g | 500 g |

Table 3

| Example | produced h-BN | | | properties of the sintered body | |
|---|---|---|---|---|---|
| | purity % | crystallite size $L_c$ nm | content of alkaline earth metal oxide % | density g/cm³ | bending strength at 1000°C kg/mm³ |
| 5 | 96.8 | 10.5 | BaO 0.6 | 1.97 | 6.2 |
| 6 | 98.2 | 20.2 | CaO 0.6 | 2.03 | 8.1 |
| 7 | 97.2 | 10.2 | CaO 0.7 | 2.12 | 8.9 |
| 8 | 97.3 | 9.2 | BaO 1.1 | 2.12 | 10.3 |
| 9 | 97.3 | 11.7 | CaO 0.9 | 2.08 | 6.9 |
| 10 | 97.8 | 9.7 | BaO 0.9 | 1.96 | 9.1 |
| 11 | 98.6 | 10.4 | CaO 0.7 | 2.06 | 8.3 |
| 12 | 98.1 | 9.1 | CaO 0.8 | 2.07 | 11.7 |
| C-2 | 68.0 | 8.2 | CaO 6.4<br>C 8.6<br>Na₂O 5.9 | 2.07 | 1.8 |

EP 0 170 817 B1

### Example 13

A crude h-BN powder prepared by heating a 1:1 by weight blend of boric acid and malamine at 900°C for 2 hours in a stream of ammonia gas had a purity of 83%, average crystallite size $L_c$ of 4.8 nm and a particle diameter distribution in the range from 0.01 to 0.04 µm. This crude h-BN powder was admixed with 1.5% by weight of an amorphous graphite powder and thoroughly dry-blended in an alumina-made ball mill and the thus obtained powdery blend was loosely packed in a graphite crucible and heated at 1600°C for 2 hours in a stream of ammonia gas in a high-frequency induction furnace to give an upgraded h-BN powder which has a purity of 99.4%, $L_c$ of 21.3 nm and particle diameter distribution from 0.1 to 0.4 µm.

### Example 14

A crude h-BN powder was prepared by heating a 1:1.5 by weight blend of borax and urea at 900°C for 2 hours in a stream of ammonia gas followed by washing with water to remove the sodium content. The powder had a purity of 89%, $L_c$ of 8.4 nm and particle diameter distribution from 0.02 to 0.03 µm. This crude h-BN powder was admixed with 1.0% by weight of an amorphous graphite powder by dry blending and the powdery blend was packed loosely in a graphite crucible and heated at 1800°C for 1 hour in a stream of 1:1 by volume gaseous mixture of ammonia and nitrogen to give an upgraded h-BN powder which had a purity of 99.9%, $L_c$ of 27.2 nm and particle diameter distribution from 0.2 to 0.5 µm.

### Example 15

The same powdery blend of boric acid and malamine as used in Example 13 was heated at 800°C for 1 hour in a stream of ammonia to give a crude h-BN powder having a purity of 71%, $L_c$ of 1.9 nm and particle diameter distribution from 0.01 to 0.02 µm. This powder was admixed with 2.6% by weight of an amorphous graphite powder by dry blending and shaped into tablets of each 10 mm diameter and 10 mm height, which were heated in a graphite crucible at 1700°C for 2 hours in a stream of ammonia gas. The thus upgraded h-BN powder had a purity of 99.1%, $L_c$ of 23.6 nm and particle diameter distribution from 0.1 to 0.5 µm.

### Comparative Example 3

The crude h-BN powder prepared in Example 13 as such was loosely packed into a graphite crucible and heated at 1800°C for 1 hour in a stream of nitrogen gas to give an upgraded h-BN powder which had a purity of 99.7%, $L_c$ of 78.6 nm and particle diameter distribution from 0.8 to 5.0 µm.

### Claims

1. A powder of hexagonal boron nitride having a purity of at least 97% by weight, of which the average crystallite size is in the range from 8 to 50 nm.

2. A method for the preparation of the hexagonal boron nitride powder of claim 1, which comprises the steps of:
   (a) admixing a crude powder of hexagonal boron nitride with a powder of a carbonaceous material to form a powdery blend; and
   (b) heating the powdery blend in a stream of an inert gas.

3. The method for the preparation of a high-purity hexagonal boron nitride powder as claimed in claim 2 wherein the crude powder of hexagonal boron nitride powder has a purity in the range from 70 to 90% by weight.

4. The method for the preparation of a high-purity hexagonal boron nitride powder as claimed in claim 2 wherein the amount of the powder of the carbonaceous material is in the range from 0.5 to 2.0% by weight based on the crude hexagonal boron nitride powder.

5. A method for the preparation of a high-purity hexagonal boron nitride powder as claimed in claim 1 which comprises the steps of:
   (a) admixing a powdery blend of boric acid or boron oxide and a nitrogen compound with borax or anhydrous borax in an amount in the range from 5 to 50% by weight based on the boric acid or boron oxide;
   (b) heating the powdery blend in an atmosphere of ammonia gas to form a crude powder of hexagonal boron nitride;
   (c) admixing the crude powder of hexagonal boron nitride powder with a powder of a carbonaceous material in an amount from 0.5 to 2.0% by weight; and
   (d) heating the powder of the hexagonal boron nitride admixed with a powder of a carbonaceous material at a temperature from 1300°C to 1600°C in an atmosphere of an inert gas.

6. A method for the preparation of a finely divided, high-purity powder of hexagonal boron nitride as claimed in claim 1 which comprises the steps of;
   (a) admixing a crude powder of hexagonal boron nitride with a powder of a carbonaceous material in an amount from 0.5 to 2.0% by weight based on said crude powder; and
   (b) heating the crude powder of hexagonal boron nitride admixed with the powder of a carbonaneous material at a temperature of 1500°C or higher in a stream of an ammonia gas or a gaseous mixture composed of ammonia and a non-oxidizing gas.

14

7. A method for the preparation of a high-purity hexagonal boron nitride of low crystallinity as claimed in claim 1 which comprises the steps of:

(a) admixing a powdery blend of an oxygen-containing boron compound and a nitrogen compound with an alkaline earth metal compound in an amount from 0.002 to 0.1 mole as alkaline earth metal per mole of the boron in the powdery blend;

(b) further admixing the powdery blend with a powder of a carbonaceous material in an amount from 0.01 to 0.1 mole as carbon per mole of the boron in the powdery blend or anhydrous borax in an amount from 2.5 to 30% by weight based on the oxygen-containing boron compound in the powdery blend; and

(c) heating the powdery blend from 1300°C to 1600°C in a non-oxidizing atmosphere under normal pressure or under reduced pressure.

## Patentansprüche

1. Pulver aus hexagonalem Bornitrid mit einer Reinheit von mindestens 97 Gewichtsprozent, dessen mittlere Kristallitgröße im Bereich von 8 bis 50 nm liegt.

2. Verfahren zur Herstellung des hexagonalen Bornitridpulvers nach Anspruch 1, das folgende Schritte umfaßt:

a) Vermischen von rohem Pulver aus hexagonalem Bornitrid mit einem Pulver aus Kohlenstoff enthaltendem Material unter Bildung eines pulvrigen Gemisches; und

b) Erhitzen des pulvrigen Gemisches in einem Inertgasstrom.

3. Verfahren zur Herstellung eines hochreinen, hexagonalen Bornitridpulvers nach Anspruch 2, wobei das rohe Pulver aus hexagonalem Bornitridpulver eine Reinheit im Bereich von 70 bis 90 Gewichtsprozent besitzt.

4. Verfahren zur Herstellung eines hochreinen hexagonalen Bornitridpulvers nach Anspruch 2, wobei die Menge des Pulvers aus Kohlenstoff enthaltendem Material im Bereich von 0,5 bis 2,0 Gewichtsprozent, bezogen auf rohes hexagonales Bornitridpulver, liegt.

5. Verfahren zur Herstellung eines hochreinen hexagonalen Bornitridpulvers nach Anspruch 1, das folgende Schritte umfaßt:

a) Vermischen eines pulvrigen Gemisches von Borsäure oder Boroxid und einer Stickstoffverbindung mit Borax oder wasserfreiem Borax in einer Menge im Bereich von 5 bis 50 Gewichtsprozent bezogen auf Borsäure oder Boroxid;

b) Erhitzen des pulvrigen Gemisches in einer Ammoniakgasatmosphäre zur Bildung eines rohes Pulvers aus hexagonalem Bornitrid;

c) Vermischen des rohen hexagonalen Bornitridpulvers mit einem Pulver aus Kohlenstoff enthaltendem Material in einer Menge von 0,5 bis 2,0 Gwichtsprozent; und

d) Erhitzen des rohen Pulvers aus hexagonalem Bornitrid, das mit einem Pulver aus Kohlenstoff enthaltenden Material vermischt ist, auf eine Temperatur von 1300 bis 1600°C in einer Inertgasatomosphäre.

6. Verfahren zur Herstellung eines feinteiligen, hochreinen Pulvers aus hexagonalem Bornitrid nach Anspruch 1, dad foglende Schritte umfaßt:

a) Vermischen eines rohen Pulvers aus hexagonalem Bornitrid mit einem Pulver aus Kohlenstoff enthaltendem Material in einer Menge von 0,5 bis 2,0 Gewichtsprozent, bezogen auf das rohe Pulver; und

b) Erhitzen des rohen Pulvers aus hexagonalem Bornitrid, das mit dem Pulver aus Kohlenstoff enthaltendem Material vermischt ist, auf eine Temperatur von 1500°C oder höher in einem Strom aus Ammoniakgas oder aus einem gasförmigen Gemisch aus Ammoniak und einem nicht-oxidierenden Gas.

7. Verfahren zur Herstellung eines hochreinen hexagonalen Bornitrids von geringer Kristallinität nach Anspruch 1, das folgende Schritte umfaßt:

a) Vermischen eines pulvrigen Gemisches einer Sauerstoff enthaltenden Borverbindung und einer Stickstoffverbindung mit einer Erdalkalimetallverbindung in einer Menge von 0,002 bis 0,1 Mol Erdalkalimetall pro Mol Bor in dem pulvrigen Gemsich;

b) weiterhin Vermischen des pulvrigen Gemisches mit einem Pulver aus Kohlenstoff enthaltendem Material in einer Menge von 0,01 bis 0,1 Mol Kohlenstoff pro Mol Bor in dem pulvrigen Gemisch oder wasserfreiem Borax in einer Menge von 2,5 bis 30 Gewichtsprozent bezogen auf die sauerstoffhaltige Borverbindung in dem pulvrigen Gemisch; und

c) Erhitzen des pulvrigen Gemisches auf 1300 bis 1600°C in einer nicht oxidierenden Atmosphäre unter Normaldruck oder reduziertem Druck.

## Revendications

1. Poudre de nitrure de bore hexagonal d'une pureté d'un moins 97% en poids, avec une taille moyenne des cristallites, de 8 à 50 nm.

2. Procédé de préparation de la poudre de nitrure de bore hexagonal de la revendication 1, dans lequel;

(a) on mélange une poudre brute de nitrure de bore hexagonal, avec une poudre d'un matériau carboné, pour former un mélange pulvérulent; et

(b) on chauffe le mélange pulvérulent dans un courant de gaz inerte.

3. Procédé de préparation d'une poudre de nitrure de bore hexagonal de haute pureté, selon la revendication 2, dans lequel la poudre brute de nitrure de bore hexagonal a une pureté de 70 à 90% en poids.

4. Procédé de préparation d'une poudre de nitrure de bore hexagonal de haute pureté selon la revendication 2, dans lequel la quantité de la poudre de matériau carboné est de 0,5 à 2,0% en poids par rapport à la poudre brute de nitrure de bore hexagonal.

5. Procédé de préparation d'une poudre de nitrure de bore hexagonal de haute pureté, selon la revendication 1, dans lequel:

(a) on mélange un mélange pulvérulent d'acide borique ou d'oxyde de bore et d'un composé azoté, avec du borax ou du borax anhydre, selon une quantité de 5 à 50% en poids par rapport à l'acide borique ou l'oxyde de bore;

(b) on chauffe le mélange pulvérulent dans une atmosphère d'ammoniac gazeux, pour former une poudre brute de nitrure de bore hexagonal;

(c) on mélange la poudre brute de nitrure de bore hexagonal, avec une poudre d'un matériau carboné, selon une quantité de 0,5 à 2,0% en poids; et

(d) on chauffe la poudre brute de nitrure de bore hexagonal, mélangée avec une poudre de matériau carboné, à une température de 1300°C à 1600°C, dans une atmosphère de gaz inerte.

6. Procédé de préparation d'une poudre de nitrure de bore hexagonal de haute pureté et finement divisé, selon la revendication, 1 dans lequel:

(a) on mélange une poudre brute de nitrure de bore hexagonal, avec une poudre d'un matériau carboné, selon une quantité de 0,5 à 2,0% en poids par rapport à la poudre brute; et

(b) on chauffe la poudre brute de nitrure de bore hexagonal, avec la poudre de matériau carboné, à une température de 1500°C ou plus, dans un courant d'ammoniac gazeux ou dans un mélange gazeux comprenant de l'ammoniac et une gaz non oxydant.

7. Procédé de préparation de nitrure de bore hexagonal de haute pureté et de faible cristallinité, selon la revendication 1, dans lequel:

(a) on mélange un mélange pulvérulent d'un composé oxygéné dérivé du bore et d'un composé azoté, avec un composé dérive de métal alcalino-terreux, selon une quantité de 0,002 à 0,1 mole de métal alcalino-terreux, par mole du bore dans le mélange pulvérulent;

(b) on mélange encore le mélange pulvérulent, avec une poudre d'un matériau carboné, selon une quantité de 0,01 à 0,1 mole de carbone, par mole du bore dans le mélange pulvérulent , ou du borax anhydre selon une quantité de 2,5 à 30% en poids par rapport au composé oxygéné dérivé du bore dans le mélange pulvérulent; et

(c) on chauffe le mélange pulvérulent à une température de 1300 à 1600°C dans une atmosphère non oxydante, sous pression normale ou sous pression réduite.

Fig . 1    Prior  Art

Fig . 2

Fig . 3

Fig.4

Fig.5

Fig . 6

Fig . 7